# EUROPÄISCHE PATENTSCHRIFT

(11) **EP 1 112 196 B1**
(45) Veröffentlichungstag und Bekanntmachung des Hinweises auf die Patenterteilung: **27.08.2008**
(21) Anmeldenummer: 00943977.9
(22) Anmeldetag: 04.07.2000
(51) Int. Cl.: B60L 15/20, B60L 9/28

(54) **VERFAHREN ZUR STEUERUNG EINES LEISTUNGS-ANTRIEBSSYSTEMS**
METHOD FOR CONTROLLING A POWER DRIVE SYSTEM
PROCEDE DE COMMANDE D'UN SYSTEME D'ENTRAINEMENT DE PUISSANCE

(30) Priorität: 07.07.1999 DE 19931199
(43) Veröffentlichungstag der Anmeldung: 04.07.2001
(73) Patentinhaber: Bombardier Transportation GmbH, 10785 Berlin (DE)
(72) Erfinder: KLOSE, Christian, D-14774 Brandenburg a.d.H. (DE); UNGER-WEBER, Frank, D-14109 Berlin (DE)
(74) Vertreter: Cohausz & Florack
(86) Internationale Anmeldenummer: PCT/EP2000/006208
(87) Internationale Veröffentlichungsnummer: WO 2001/003965

(56) Entgegenhaltungen:
- DE-A- 4 422 275
- DE-A- 19 745 849
- DE-C- 4 435 351

## Beschreibung

Die Erfindung betrifft ein Verfahren gemäß dem Oberbegriff des ersten Anspruchs und eine Steuereinrichtung gemäß dem Oberbegriff des Anspruchs 11. Nach einem bekannten Verfahren zur Steuerung eines drehzahlvariablen Hochleistungs-Antriebssystems (DE 44 22 275 A1) werden zwei Drehstrommotoren über je einen zugeordneten Pulswechselrichter aus einem Gleichstromzwischenkreis gespeist, der seinerseits über einen Netzstromrichter aus einem Versorgungsnetz geladen wird. Die Antriebsmotoren weisen ein Kippmoment auf, das stets größer als das aufzubringende Drehmoment sein muß. Zudem werden sie oberhalb einer vorbestimmten Drehzahl, die durch den Typenpunkt bestimmt ist, für konstante Leistungsaufnahme ausgelegt. Um dabei Störgrößen wie Pendelmomente oder Oberschwingungsverluste insbesondere im Pulsbetriebsbereich zu vermindern, und dadurch eine Reduzierung der elektrischen und mechanischen Beanspruchung der Antriebsmotoren sowie der Spannungsbelastung der Zwischenkreisumrichter zu erreichen, wird die Zwischenkreisgleichspannung im Drehzahlbereich unterhalb des Typenpunktes gegenüber der maximal erreichbaren Zwischenkreisspannung abgesenkt und im Drehzahlbereich oberhalb des Typenpunkts, ausgehend von der abgesenkten Zwischenkreisspannung, in einem drehzahlabhängigen Übergang auf die maximale Zwischenkreisspannung bei maximaler Drehzahl der Antriebsmotoren angehoben. Die Netzstromrichter, die als Gleichstromsteller bzw. Vierquadrantensteller ausgebildet sein können, sind dann, wenn die Antriebsmotoren auch im Generatorbetrieb ein Bremsdrehmoment für das sonst angetriebene Fahrzeug erzeugen, als Vierquadrantensteller ausgebildet. Im Fahrbetrieb steigen die Motorspannungen bei einem relativ konstanten magnetischen Fluß von der Drehzahl Null bis zum Typenpunkt linear mit der Drehzahl an. Dabei ist im Typenpunkt die maximale Leiter-Spannung erreicht. Bei Drehzahlen über den Typenpunkt hinaus bleibt die Motorspannung dann bei einem sinkenden Fluß konstant.

Der Erfindung liegt die Aufgabe zugrunde, ein Verfahren zur Steuerung gemäß dem Oberbegriff des ersten Anspruchs und eine Steuereinrichtung gemäß dem Oberbegriff des Anspruchs 11 anzugeben, durch das eine weiter verbesserte Energiebilanz des Antriebssystems erreicht wird.

Die Lösung dieser Aufgabe erfolgt gemäß der Erfindung durch die kennzeichnenden Merkmale des ersten Anspruchs und des Anspruchs 11. Vorteilhafte Weiterbildungen sind in den übrigen Ansprüchen angegeben.

Bei einer Verfahrensweise gemäß der Erfindung wird der Feststellung Rechnung getragen, daß im Drehzahlbereich oberhalb des Typenpunktes, also im Bereich der Vollaussteuerung des Wechselrichters, bei den jeweiligen Drehzahlen im unteren Bereich des zugehörigen, vom Antriebsmotor aufzubringenden Antriebsmoments oder abzugebenden Bremsmoments die zugehörige Zwischenkreisspannung noch nicht auf den durch den Stand der Technik vorgegebenen erhöhten Wert gesteigert werden muß. Erfindungsgemäß läßt sich die Zwischenkreisspannung durch ein verbessertes Kennfeld der Form Ud=f(M,n) darstellen. Demnach wird bei geringen Drehmomentanforderungen die Zwischenkreisspannung weitgehend konstant gehalten oder um wenige Prozente gegenüber der unterhalb des Typenpunktes, also im Puls-Bereich des Wechselrichters, herrschenden Zwischenkreisspannung angehoben werden. Erst bei erhöhter Drehmomentanforderung oberhalb des Typenpunktes braucht dann die Zwischenkreisspannung zur Erfüllung der an das Antriebssystem gestellten Forderungen hinsichtlich Drehmoment und Drehzahl auf den durch den Stand der Technik vorgegebenen Wert abhängig von der gesteigerten Drehmomentenanforderung erhöht zu werden. Die Verlustleistung des Antriebssystems ist dann stets minimal. Der Betriebsbereich, in dem die Bauelemente im Zwischenkreisumrichter mit verminderter Spannung beaufschlagt werden und dadurch eine höhere Lebensdauer bei reduzierter Gesamtverlustleistung aufweisen, wird dadurch für Drehzahlen über den Typenpunkt hinaus erweitert.

Zusätzlich oder auch unabhängig davon kann die Steuerung des magnetischen Flusses im jeweiligen Antriebsmotor in analoger Weise erfolgen. Demnach wird der magnetische Fluß im Antriebsmotor bei Drehzahlen oberhalb des Typenpunkts zu höheren Drehzahlen hin stetig vermindert, wobei der Ausgangswert dem weithin konstanten Wert entspricht, wie er im Kennlinienfeld unterhalb des Typenpunkts gegeben ist. Dabei wird der magnetische Fluß, jeweils bezogen auf eine wählbare Drehzahl, im unteren Bereich des vom Antriebsmotor aufzubringenden oder abzubremsenden Drehmoments weitgehend konstant gehalten und demgegenüber erst zu höheren geforderten Drehmomenten hin ansteigend gesteuert. Es ergibt sich dadurch ähnlich wie beim Kennlinienfeld für die Zwischenkreisspannung ein rinnenförmiges, hier zu niedrigeren Werten abfallendes Kennlinienfeld oberhalb des Typenpunkts. Insgesamt vermindert sich dabei der magnetische Fluß zu höheren Drehzahlen hin kontinuierlich. Der Antriebsmotor wird somit oberhalb des Typenpunkts ausgehend von niedrigen Drehmomentanforderungen im unteren Bereich mit optimal niedrigen Stromwerten betrieben, die erst gesteigert werden, wenn die Drehmomentforderung darüber hinaus zum jeweiligen Höchstwert hin gesteigert werden. Dabei erreicht der magnetische Fluß erst bei höheren Drehmomentanforderungen den Wert, der durch den Stand der Technik vorgegeben ist. Mit einer Verminderung des magnetischen Flusses gehen auch die elektrischen und Wirbelstromverluste auf einen Minimalwert zurück, wobei die Absenkung des magnetischen Flusses bei niedriger Drehmomentanforderung nur soweit erfolgen darf, daß das Kippmoment des Antriebsmotors nicht unterschritten wird.

Wenn in das Antriebssystem auch Hilfsbetriebe in Form von Lüftern, Pumpen oder dergleichen eingefügt sind, die zur Kühlung der einzelnen Komponenten, wie Transformator, Umrichter und Antriebsmotor dienen, dann ist es zweckmäßig, auch deren Leistungsaufnahme in die Energiebilanz mit aufzunehmen und abhängig von den Betriebsbedingungen zu minimieren. Dazu kann die Kühlleistung und damit die Versorgungsleistung bis zum Erreichen einer vorbestimmten, maximal zulässigen Temperatur wenigstens einer, eine hohe thermische Zeitkonstante aufweisenden Komponente bzw. eines Teils davon im Antriebssystem auf einen beliebigen unterhalb der maximalen Kühlleistung liegenden Wert gesteuert werden. Dagegen wird die Kühlleistung oberhalb der vorbestimmten Temperatur auf den Maximalwert hochgefahren. Die Steuerung der Hilfbetriebeleistung und damit der Kühlung der einzelnen Komponenten hängt von der jeweiligen Komponententemperaturen und der Zahl der unabhängig voneinander einstellbaren Kühlkomponente ab. Sind Kühlkomponenten nicht voneinander unabhängig einstellbar, erfolgt die Steuerung durch Maximalwertauswahl.

Zusätzlich oder alternativ kann es auch zweckmäßig sein, die Kühlleistung proportional zur aktuell im Antriebssystem an Komponenten mit geringer thermischer Zeitkonstante auftretenden Verlustleistung zu steuern. Dadurch wird vermieden, daß partielle Überhitzungen von Komponenten oder Teilen davon an Stellen auftreten, die mit thermischen Sensoren nicht oder nur schwer zu erreichen sind. Es tritt somit eine intensivere Belüftung ein, wenn im Antriebssystem Laststöße auftreten.

Eine zusätzliche Optimierung der Energiebilanz ergibt sich auch dadurch, daß unterhalb vorbestimmter maximaler Temperatur- und Verlustleistungswerte im Antriebssystem die Kühlleistung nur erhöht wird, wenn die für die Kühlung aufzuwendende Gesamtenergie kleiner als die Summe der bei fehlender Kühlung zusätzlich auftretenden elektrischen Verlustleistungen im Antriebssystem ist. Dazu wird aus den aktuellen Betriebsdaten die gegenwärtige Verlustleistung der einzelnen Komponenten bestimmt und durch Vergleich mit z. B. empirisch ermittelten Werten festgelegt, ob es bei steigender Temperatur oder Belastung der Komponenten des Antriebssystems und der daraus erwachsenden Erwärmung im Vergleich zur gegenwärtig erforderlichen Kühlleistung hinsichtlich der Gesamtenergiebilanz günstiger ist, jetzt oder erst zu einem späteren Zeitpunkt die Hilfsbetriebe einzuschalten.

Daneben wird zur Verbesserung der Energiebilanz auch vorgeschlagen, den magnetischen Fluß im Antriebsmotor bei fehlender Drehmomentanforderung, also bei antriebslosem Rollen oder Stillstand eines Schienenfahrzeugs zu entregen. Es wird dann auch der für den Leerlaufbetrieb erforderliche Energiebedarf eliminiert. Zusätzlich wird die Hilfsbetriebeleistung durch Anpassung der Kühlverhältnisse um die verringerte Lastanforderung reduziert. Dies geschieht bis hin zur vollständigen Abschaltung einzelner Hilfsbetriebe.

Ein entsprechend den Maßnahmen der Erfindung betriebenes und mit den dafür erforderlichen Einrichtungen ausgestattetes Schienenfahrzeug weist ein verlustminimales Antriebssystem auf, in das auch die Hilfsbetriebe einbezogen werden können.

Die Erfindung ist nachfolgend anhand von Prinzipdarstellungen näher erläutert.

Es zeigen:
- Fig. 1: ein Prinzipschaltbild für ein Antriebssystem mit Optimierungssteuerung,
- Fig. 2: ein Flußdiagramm mit Schritten zur Energieoptimierung des Antriebssystems,
- Fig. 3: ein dreidimensionales Schaubild über den Verlauf einer Zwischenkreisspannung im Zwischenkreisumrichter des Antriebssystems,
- Fig. 3a: ein Schaubild entsprechend Fig. 3 zum Stand der Technik,
- Fig. 4: ein dreidimensionales Schaubild über den Verlauf des magnetischen Flusses abhängig vom Drehmoment und der Drehzahl eines Antriebsmotors im Antriebssystem und
- Fig. 4a: ein Schaubild entsprechend Fig. 4 zum Stand der Technik.

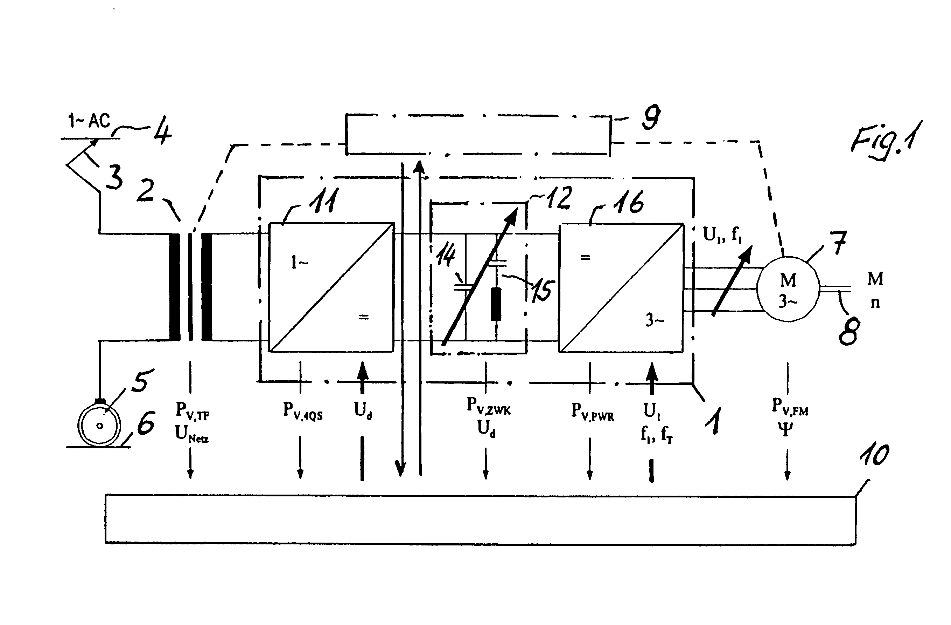

Gemäß Figur 1 umfaßt eine Steuerung zum drehzahlvariablen Betrieb eines Hochleistungs-Antriebssystems einen Zwischenkreisumrichter 1, der vorliegend über einen Transformator 2 über einen Stromabnehmer 3 aus einem Einphasenwechselstrom-Versorgungsnetz 4 gespeist wird. Die Primärwicklung ist dabei über mindestens ein Schienenrad 5 und an mindestens eine Schiene 6 an den geerdeten Pol des Versorgungsnetzes 4 abgeschlossen. Die Sekundärwicklung des Transformators 2 versorgt den Zwischenkreis des Umrichters 1, dessen dreiphasiger Ausgang zumindest einen Drehstrommotor 7 speist, der als Antriebsmotor für ein Schienenfahrzeug dient. Der Antriebsmotor 7 überträgt ein Antriebsdrehmoment direkt oder über Getriebe auf das oder weitere Schienenräder 5 des Schienenfahrzeugs. Dem Zwischenkreisumrichter 1, dem Transformator 2 und dem Antriebsmotor 7 sind Hilfsbetriebe 9 zugeordnet, die Lüftungsventilatoren und/oder Flüssigkeitspumpeinrichtungen zur Kühlung der Komponenten des Antriebssystems aus Antriebsmotor 7, Zwischenkreisumrichter 1 und Transformator 2, gegebenenfalls unter Einschluß der zugehörigen Steuerungen umfassen und die Komponenten bedarfsgerecht kühlen. Außerdem ist eine Optimierungssteuerung 10 für das Antriebssystem insgesamt vorgesehen, welche die Betriebsdaten der Komponenten des Antriebssystems einschließlich der Hilfsbetriebe erfaßt und nach einer Optimierungsbestimmung Optimierungssteuerdaten an diese Komponenten liefert in der Weise, daß die Gesamtenergie abhängig vom Betriebspunkt des Antriebssystems und hier insbesondere bezogen auf das vom Antriebsmotor 7 abgegebene Antriebsdrehmoment und die dabei herrschende Drehzahl und der Versorgungsnetzspannung optimiert wird. Ein so ausgestattetes Schienenfahrzeug arbeitet dann mit minimalem Energieaufwand.

Der Zwischenkreisumrichter 1 kann auch aus einem dieselelektrisch angetriebenen Generatorsystem oder aus einem Gleichstromnetz gespeist werden.

Der Zwischenkreisumrichter 1 umfaßt vorliegend einen Netzstromrichter 11, der als Gleichstromsteller bei Speisung aus einem Gleichstromnetz und insbesondere bei Wechselstrombetrieb als Vierquadrantensteller ausgebildet ist, um bei Umschaltung auf Bremsbetrieb des Antriebsmotors 7 eine Einspeisung von zurückgewonnener elektrischer Energie in das Versorgungsnetz 4 zu ermöglichen. Der aus der Sekundärwicklung des Transformators 2 gespeiste Netzgleichrichter 11 speist seinerseits sekundärseitig einen Zwischenkreis 12, der einen elektrischen Zwischenkreiskondensator 14 und eine parallel dazu geschaltete Saugkreisanordnung 15 aufweist. An den mit Gleichspannung gespeisten Zwischenkreis 12 ist ein Pulswechselrichter 16 angeschlossen, der eine frequenzvariable Drehspannung zur Speisung des drehzahlveränderlichen Antriebsmotors 7 mit der notwendigen Antriebsenergie generiert und eine Aussteuerung im Bereich von Null bis zur Vollaussteuerung besitzt. Die Wechselrichter-Aussteuerung ist durch das Verhältnis von maximal möglicher zur tatsächlichen Wechselrichter-Ausgangsspannung charakterisiert, wobei die maximal mögliche Ausgangsspannung bei Vollaussteuerung erreicht wird. Bei Vollaussteuerung arbeitet der Wechselrichter im Blockbetrieb, im verbleibenden Aussteuerbereich arbeitet der Wechselrichter im Pulsbetrieb.

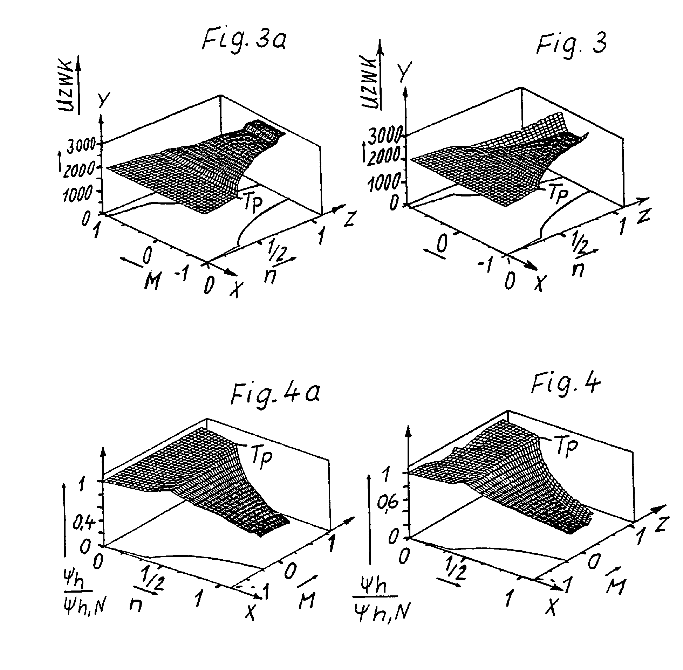

Der Netzgleichrichter 11 wird von der Optimierungssteuerung 10 so gesteuert, daß sich eine auf die Betriebsbedingungen des Antriebsmotors 7 abgestimmte optimale Zwischenkreisspannung (Fig. 3) am Zwischenkreis 12 einstellt. Die Variabilität der Zwischenkreisspannung ist dabei durch einen schräg nach oben gerichteten Pfeil angedeutet (Figur 1). Der Pulswechselrichter 16 ist seinerseits ebenfalls von der Optimierungssteuerung 10 wiederum in Abhängigkeit von den Betriebsanforderungen an den Antriebsmotor 7 und dem Wert der Zwischenkreisspannung gesteuert, in dem durch Änderung der Drehspannung der magnetische Fluß im Antriebsmotor 7 optimal an die gegebenen Betriebsbedingungen hinsichtlich gefordertem Drehmoment und Drehzahl angepaßt wird (Figur 4). Die Speisespannung des Antriebsmotors 7 ist somit ebenfalls variabel und durch einen schräg nach oben gerichteten Pfeil symbolisiert (Fig. 1).

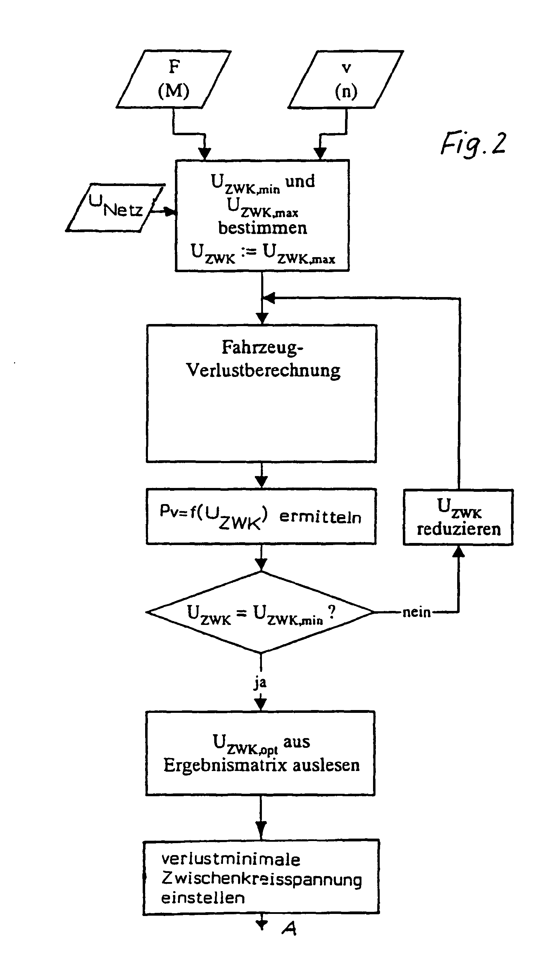

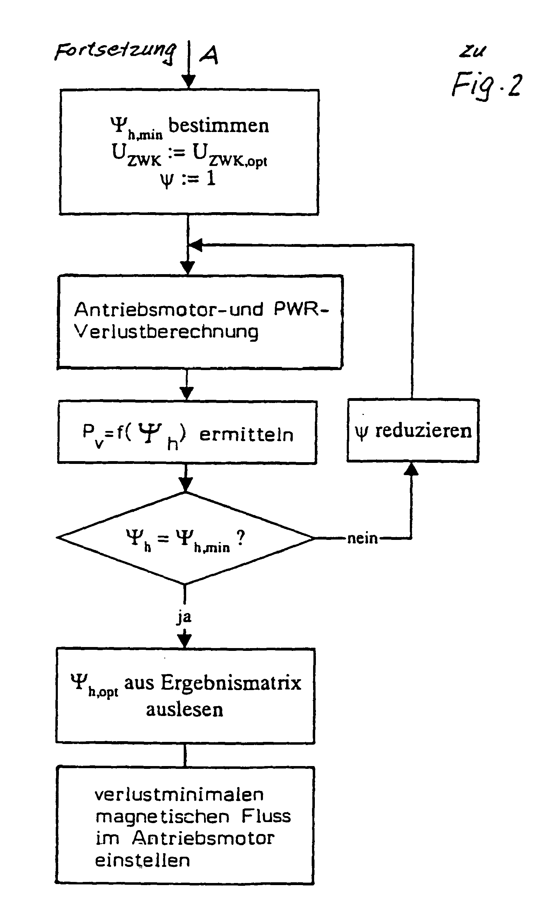

Um eine Minimierung des Gesamtenergiebedarfs des Antriebssystems einschließlich der Hilfsbetriebe zu erreichen, wird gemäß Figur 2 so verfahren, daß aus den Eingangsgrößen gefordertes Drehmoment M und geforderte Drehzahl n eine für den entsprechenden Betriebspunkt bestimmte minimale Zwischenkreisspannung Uzwk min aus der aktuelen Netzspannung ermittelt wird, wobei gleichzeitig eine für diesen Betriebspunkt höchstens zulässige Zwischenkreisspannung Uzwk max festgelegt wird. Hierbei muß die minimale Zwischenkreisspannung kleiner bzw. gleich der festgelegten maximalen Zwischenkreisspannung sein. Auf der Grundlage der vorgegebenen, vom Netzgleichrichter 11 zu erzeugenden minimalen Zwischenkreisspannung im Zwischenkreis 12 erfolgt in der Optimierungssteuerung 10 eine Verlustberechnung, in welcher alle Komponenten des Antriebssystems hinsichtlich ihrer im Betriebspunkt zu erwartenden elektrischen Verluste berücksichtigt werden, wobei bei Pulsbetrieb des Wechselrichters 16 die Zwischenkreisspannung auf einem minimalen Wert gehalten wird. Die daraus gewonnenen Steuerdaten werden in einer Ergebnismatrix abgelegt und danach wird am Zwischenkreis 12 diejenige Zwischenkreisspannung eingestellt, die für sich im Antriebssystem minimale Gesamtverluste ergeben. Für die einzelnen Stufen werden dann die Ergebnisse wiederum in der Ergebnismatrix stufenbezogen abgelegt. Erreicht die Spannung am Zwischenkreis 12 ihren Minimalwertbereich, dann wird durch Vergleich der zu den einzelnen Stufen abgelegten Steuerdaten aus der Ergebnismatrix der Wert ausgelesen, für welchen sich eine optimal niedrige Energiebilanz ergibt. Die Energiebilanzberechnungen werden dabei für jeden möglichen Arbeitspunkt des Antriebsmotors 7 durchgeführt. Die Zwischenkreisspannung wird so lange auf einem untersten Wert gehalten, bis die zur Erbringung des geforderten Drehmoments des Antriebsmotors 9 erforderliche Motorspannung einen höheren Wert der Zwischenkreisspannung erfordert. In Figur 3 ist dieser Kennlinienbereich annähernd als Ebene dargestellt. Das Ergebnis der Optimierungsberechnungen für die Zwischenkreisspannung ist in Figur 3 dargestellt, wobei die durch den Typenpunkt Tp vorbestimmte Drehzahl bei einem Wert liegt, an dem sich eine signifikante Änderung des Kennlinienfeldes zeigt. Im dargestellten dreidimensionalen Koordinatensystem ist dabei auf der x-Achse das Drehmoment des Antriebsmotors für Fahr- und Bremsbetrieb aufgezeichnet, weshalb der Nullpunkt in der Mitte des relevanten Bereichs der x-Achse liegt. Auf der nach oben gerichteten y-Achse ist die Zwischenkreisspannung aufgetragen, während auf der z-Achse die Drehzahl aufgetragen ist. Demnach kann die Zwischenkreisspannung im Zwischenkreis 12 bei Drehzahlen oberhalb der durch den Typenpunkt vorgegebenen Drehzahl bis zur maximalen Drehzahl und dabei im unteren Bereich des vom Antriebsmotor 7 aufzubringenden oder abzubremsenden Drehmoments zumindest weitgehend auf ihrem Wert gehalten werden, den sie unterhalb der vorgegebenen Drehzahl, also unterhalb des Typenpunkts aufweist. Dabei nimmt mit zunehmender Drehzahl die Größe des Drehmoments ab, bis zu dem die Zwischenkreisspannung zumindest weitgehend auf dem Niveau bleiben kann, wie sie im Pulsbereich des Wechselrichter herrscht. Erst bei darüber hinausgehenden drehzahlbezogenen Drehmomentanforderungen erfolgt eine vom Drehmoment abhängige Anhebung der Zwischenkreisspannung. Es ergibt sich dadurch ein rinnenförmiges Kennlinienfeld für Fahr- und Bremsbetrieb.

Im Vergleich zu Figur 3 ist in Figur 3a das Kennlinienfeld und die Zwischenkreisspannung gemäß dem Stand der Technik dargestellt. Es zeigt sich hier, daß die Zwischenkreisspannung von der dem Typenpunkt entsprechenden Drehzahl an unabhängig von dem vom Antriebsmotor 7 jeweils aufzubringenden Drehmoment bis zu ihrem Maximalwert gesteigert wird. Nach der Erfindung wird dagegen die Zwischenkreisspannung erst im Bereich der oberen Drehzahlforderungen angehoben; sie ist somit auch vom Drehmoment abhängig.

Nach der Optimierung der Zwischenkreisspannung entsprechend Figur 2 wird ebenfalls nach Fig. 2 unter den durch die Drehmomenten- und Drehzahlanforderungen gegebenen Bedingungen der für die geforderte Antriebsleistung des Antriebsmotors 7 optimale magnetische Fluß bestimmt. Dabei wird davon ausgegangen, daß die augenblickliche Zwischenkreisspannung ungleich der optimalen Zwischenkreisspannung und der relative magnetische Fluß kleiner als 1, also unter dem maximalen magnetischen Fluß liegen kann. Ausgehend vom maximalen Fluß wird in einem Rechenmodell der Fluß schrittweise bis auf einen vorgegebenen Wert abgesenkt. Dabei werden die Verluste im Wechselrichter und Antriebsmotor ermittelt und in einer Kennlinie als Funktion des Flusses abgelegt. Der zum Verlustminimum gehörende Fluß wird als optimaler Fluß ausgelesen und dem Antriebssystem als Sollwert übergeben. Dieser Vorgang wird für jeden Arbeitspunkt des Antriebssystems angewendet. Bei der Optimierung der Zwischenkreisspannung wie des magnetischen Flusses werden dabei jeweils die von den in Betracht zu ziehenden Komponenten erzeugten Verlustleistungen und zugehörige Parameter von der Optimierungssteuerung 10 in den Optimierungsvorgang einbezogen. Dabei ist es möglich, zur Verminderung der Verluste im Antriebssystem nur die Optimierung der Zwischenkreisspannung oder nur die Optimierung des magnetischen Flusses für den Antriebsmotor durchzuführen, wenn nur eine dieser Maßnahmen technisch sinnvoll oder aus Kostengründen realisiert werden soll.

In Figur 4 ist das Kennlinienfeld für die optimierte Steuerung des magnetischen Flusses im Antriebsmotor 7 wiederum im dreidiminsionalen Kennlinienfeld dargestellt, wobei auf der x-Achse die Drehzahl, auf der y-Achse der normierte magnetische Fluß und auf der z-Achse das geforderte Antriebs- oder Bremsmoment des Antriebsmotors 7 dargestellt ist. Der Nullpunkt für das Drehmoment ist dabei wiederum im mittleren Bereich der z-Achse aufgetragen, wobei positive Drehmomente für Antriebsenergie und negative Drehmomente für Bremsenergie stehen. Ein energieoptimierter Betrieb ergibt sich demnach bei Vollaussteuerung des Wechselrichters, wenn hin zu der maximalen Drehzahl im unteren Bereich der Drehmomentenforderung eine stärkere Absenkung des magnetischen Flusses erfolgt, als im oberen Bereich der Drehmomentanforderung. Im Pulsbetrieb des Wechselrichter ergibt sich demnach bei geringer Drehmomentanforderung arbeitspunktabhängig eine minimale Verlustleistung durch Absenkung des magnetischen Flusses. Bei Vollaussteuerung des Wechselrichters, also im Blockbetrieb, ist eine Beeinflussung desFlusses durch den Wechselrichter nicht mehr möglich. Hier ergibt sich der Fluß aus der bereits arbeitspunktabhängig optimierten Zwischenkreisspannung. Durch die Optimierung des magnetischen Flusses werden auch die in der Ständerwicklung wie im Eisen erzeugten Verluste im Antriebsmotor 7 reduziert.

In Figur 4a ist das Kennlinienfeld für den magnetischen Fluß dargestellt, wie er durch Einrichtungen des Standes der Technik realisiert ist. Demnach wird hier der magnetische Fluß nur abhängig von der Drehzahl des Antriebsmotors und unabhängig von dem geforderten Drehmoment gesteuert. Demgegenüber wird bei der optimierten Verfahrensweise gemäß Figur 4 durch die Absenkung des magnetischen Flusses im unteren Belastungsbereich des Antriebsmotors eine Absenkung des magnetischen Flusses in einem großen Teil des unteren Drehmomentkennfeldes und damit eine Reduzierung der Verlustleistungen erzielt.

Die dem Antriebssystem zugeordneten Hilfsbetriebe zur Abführung der in den Komponenten auftretenden Verlustleistung werden so gesteuert, daß die Kühlleistung bis zum Erreichen einer vorbestimmten Temperatur wenigstens einer eine hohe thermische Zeitkonstante aufweisenden Komponente oder eines Teils davon auf stark verringerten und weit unterhalb der maximalen Kühlleistung liegenden Wert gehalten wird. Eine Komponente mit hoher thermischer Zeitkonstante ist dabei der z.B. der ölgekühlte Transformator oder der eisenbehaftete Antriebsmotor und andere mit großer Masse behaftete Einzelteile. Erst oberhalb der vorbestimmten Temperatur wird abhängig von der aktuellen Temperatur zumindest einer dieser Komponenten oder eines Teils davon die Kühlleistung bis auf ihren Maximalwert temperaturabhängig erhöht. Zusätzlich oder daneben kann die Kühlleistung auch proportional zur aktuell im Antriebssystem in Komponenten mit geringer thermischer Zeitkonstante auftretenden Verlustleistungen gesteuert werden. Komponenten mit geringer thermischer Zeitkonstante sind dabei z.B. Wicklungen des Antriebmotors, Bauteile im Stromrichter, Bremswiderstände und dergleichen. Bei der Gesamtenergiebetrachtung ist es dabei zweckmäßig, daß unterhalb vorbestimmter maximaler Temperatur- und Verlustleistungswerte im Antriebssystem die Kühlleistung nur dann erhöht wird, wenn die dann zusätzlich für die Kühlung aufzuwendende Energie kleiner als die Summe der bei fehlender Kühlung zusätzlich auftretenden elektrischen Verlustenergien im Antriebssystem ist.

Werden einzelnen Komponenten des Antriebssystems, also z.B. dem Öltransformator ein Flüssigkeitskühlsystem, dem Antriebsmotor und gegebenenfalls weiteren Komponenten jeweils ein Ventilationssystem zugeordnet, dann ist es zweckmäßig, die Kühlleistung dieser einzelnen Hilfsbetriebe selektiv abhängig von der Temperatur und/oder der Belastung der zugeordneten Komponenten zu steuern und dabei einzeln die Optimierungsberechnung und die daraus folgende Steuerung auszuführen.

Für die Energiebilanz ist es auch vorteilhaft, wenn der magnetische Fluß im Antriebsmotor 7 bei fehlender Drehmomentanforderung entregt wird, der magnetische Fluß bzw. die Speisespannung des Antriebsmotors 7 also gegen Null gesteuert wird. Beim rollenden oder stehenden Schienenfahrzeug wird dann keine Energie für den Leerlaufbetrieb des Antriebsmotors verbraucht. Zusätzlich wird die Kühlung und damit die Hilfsbetriebeleistung den verringerten Lastanforderungen angepaßt, bis hin zum vollständigen Abschalten einzelner Kühlaggregate und der zu deren Spannungsversorgung vorhandenen Hilfsbetriebeumrichter.

## Patentansprüche

1. Verfahren zur Steuerung eines drehzahlvariablen Hochleistungs-Antriebssystems, das als Antriebsmotor zumindest einen Drehstrommotor (7) umfaßt, der für konstante Leistungsaufnahme oberhalb einer vorgegebenen Drehzahl ausgelegt ist und der aus einem Zwischenkreisumrichter (1) mit veränderbarer Zwischenkreisspannung gespeist wird, wobei der Zwischenkreisumrichter (1) aus einem Versorgungsnetz (4) gespeist wird und wobei die Zwischenkreisspannung im Drehzahlbereich unterhalb der vorgegebenen Drehzahl gegenüber ihrem Maximalwert abgesenkt wird, derart, daß die Zwischenkreisspannung nicht unter eine durch die im Betrieb auftretende Versorgungsnetzspannung bestimmte Minimalspannung abgesenkt wird, und im Drehzahlbereich oberhalb der vorgegebenen Drehzahl, ausgehend von der abgesenkten Zwischenkreisspannung, ein drehzahlabhängiger Übergang zur maximalen Zwischenkreisspannung bei maximaler Drehzahl erfolgt, insbesondere für Schienenfahrzeuge, die aus einem elektrischen Fahrdraht (4) oder aus einem fahrzeugeigenen dieselbetriebenen elektrischen Generator mit Antriebsenergie versorgt werden,
**dadurch gekennzeichnet, daß**
im Antriebssystem (1, 2, 7) die Zwischenkreisspannung bei Drehzahlen oberhalb der vorgegebenen Drehzahl und dabei im unteren Bereich des vom Antriebsmotor (7) aufzubringenden oder abzubremsenden Drehmoments zumindest weitgehend auf ihrem Wert gehalten wird, den sie unterhalb der vorgegebenen Drehzahl aufweist.

2. Verfahren nach Anspruch 1, **dadurch gekennzeichnet, daß** die Zwischenkreisspannung in jedem Arbeitspunkt im Wert so eingestellt wird, daß sich die minimale Gesamtverlustleistung des Fahrzeuges einstellt.

3. Verfahren nach Anspruch 1 oder 2, **dadurch gekennzeichnet, daß** der magnetische Fluß im Antriebsmotor (7) bei Feldschwächung zu höheren Drehzahlen hin stetig vermindert wird, und sich aus Uzwk ergibt, wobei der magnetische Fluß, im Pulsbereich des Wechselrichters (16) abhängig von dem im Antriebsmotor (7) aufzubringenden oder abzubremsenden Drehmoment weitgehend reduziert wird, daß sich für die Summe der Verlustleistungen im Wechselrichter (16) und Antriebsmotor (7) das Minimum ergibt

4. Verfahren nach wenigstens einem der Ansprüche 1 bis 3, **dadurch gekennzeichnet, dass** das Antriebssystem (1, 2, 7) mittels Hilfsbetrieben (9) wie Pumpen und Lüftern gekühlt wird, wobei die Kühlleistung bis zum Erreichen einer vorbestimmten Temperatur wenigstens einer eine hohe thermische Zeitkonstante aufweisenden Komponente oder eines Teils davon im Antriebssystem (1, 2, 7) auf einen stark verringerten und weit unterhalb der maximalen Kühlleistung liegenden Wert gesteuert wird und oberhalb der vorbestimmten Temperatur abhängig von der aktuellen Temperatur zumindest einer Komponente oder eines Teils davon auf die maximale Kühlleistung hochgefahren wird.

5. Verfahren nach wenigstens einem der Ansprüche 1 bis 4, **dadurch gekennzeichnet, dass** die Kühlleistung proportional zur aktuell im Antriebssystem (1, 2, 7) an Komponenten mit geringer thermischer Zeitkonstante auftretenden Verlustleistung gesteuert wird.

6. Verfahren nach Anspruch 4 oder 5, **dadurch gekennzeichnet, daß** unterhalb vorbestimmter maximaler Temperatur- und Verlustleistungswerte im Antriebssystem (1, 2, 7) die Kühlleistung nur erhöht wird, wenn die für die Kühlung zusätzlich aufzuwendende Gesamtenergie kleiner als die Summe der bei fehlender Kühlung zusätzlich auftretenden elektrischen Verlustenergien im Antriebssystem (1, 2, 7) ist.

7. Verfahren nach wenigstens einem der Ansprüche 4 bis 6, **dadurch gekennzeichnet, dass** einzelnen Komponenten des Antriebssystems (1, 2, 7) eigene Hilfsbetriebe (9) zur Kühlung zugeordnet sind und daß die Kühlleistung dieser Kühlbetriebe selektiv abhängig von der Temperatur und/oder Belastung der zugeordneten Komponente gesteuert wird.

8. Verfahren nach wenigstens einem der Ansprüche 1 bis 6, **dadurch gekennzeichnet, dass** der magnetische Fluß im Antriebsmotor (7) bei fehlender Drehmomentanforderung entregt wird, sowie Netzstromrichter (11) und Wechselrichter (16) abgeschaltet werden.

9. Verfahren nach Anspruch 8, **dadurch gekennzeichnet, daß** die zur Kühlung vorhandenen Hilfsbetriebe (9) den veränderten Lastanforderungen angepaßt werden bis hin zu ihrer vollständigen Abschaltung.

10. Verfahren nach wenigstens einem der Ansprüche 1 bis 9, **dadurch gekennzeichnet, daß** im Antriebssystem (1, 2, 7) die Zwischenkreisspannung bei Drehzahlen des Antriebsmotors (7) oberhalb der vorgegebenen Drehzahl bis zur maximalen Drehzahl und dabei im unteren Bereich des vom Antriebsmotor (7) aufzubringenden oder abzubremsenden Drehmoments zumindest weitgehend auf ihrem Wert gehalten wird, den sie unterhalb der vorgegebenen Drehzahl aufweist.

11. Steuereinrichtung zur Steuerung eines drehzahlvariablen Hochleistungs-Antriebssystems, das als Antriebsmotor zumindest einen Drehstrommotor (7) umfaßt, der für konstante Leistungsaufnahme oberhalb einer vorgegebenen Drehzahl ausgelegt ist und der aus einem Zwischenkreisumrichter (1) mit veränderbarer Zwischenkreisspannung gespeist wird, wobei der Zwischenkreisumrichter (1) aus einem Versorgungsnetz (4) gespeist wird und die Zwischenkreisspannung im Drehzahlbereich unterhalb der vorgegebenen Drehzahl gegenüber ihrem Maximalwert abgesenkt wird, derart, daß die Zwischenkreisspannung nicht unter eine durch die im Betrieb vorkommende Versorgungsnetzspannung bestimmte Minimalspannung abgesenkt wird, und im Drehzahlbereich oberhalb der vorgegebenen Drehzahl, ausgehend von der abgesenkten Zwischenkreisspannung ein drehzahlabhängiger Übergang zur maximalen Zwischenkreisspannung bei maximaler Drehzahl erfolgt, insbesondere für Schienenfahrzeuge, die aus einem elektrischen Fahrdraht (4) oder aus einem fahrzeugeigenen dieselbetriebenen elektrischen Generator mit Antriebsenergie versorgt werden,
**dadurch gekennzeichnet, daß**
im Antriebssystem (1, 2, 7) die Zwischenkreisspannung bei Drehzahlen des Antriebsmotors (7) oberhalb der vorgegebenen Drehzahl und dabei im unteren Bereich des vom Antriebsmotor (7) aufzubringenden oder abzubremsenden Drehmoments zumindest weitgehend auf ihrem Wert gehalten wird, den sie unterhalb der vorgegebenen Drehzahl aufweist.

12. Steuereinrichtung nach Anspruch 11, **dadurch gekennzeichnet, daß** im Antriebssystem (1, 2, 7) die Zwischenkreisspannung bei Drehzahlen des Antriebsmotors (7) oberhalb der vorgegebenen Drehzahl bis zur maximalen Drehzahl und dabei im unteren Bereich des vom Antriebsmotor (7) aufzubringenden oder abzubremsenden Drehmoments zumindest weitgehend auf ihrem Wert gehalten wird, den sie unterhalb der vorgegebenen Drehzahl aufweist.

13. Steuereinrichtung nach Anspruch 11 oder 12, **dadurch gekennzeichnet, daß** die Zwischenkreisspannung in jedem Arbeitspunkt im Wert so eingestellt wird, daß sich die minimale Gesamtverlustleistung des Fahrzeuges einstellt.

## Claims

1. Method to control a variable-speed high-power drive system that comprises at least one three-phase motor (7) as drive motor that is designed for constant input power above a specified speed and is fed from an intermediate circuit converter (1) with a variable intermediate circuit voltage, wherein the intermediate circuit converter (1) is fed from a power line (4) and wherein the intermediate circuit voltage in the speed range below the specified speed is reduced from its maximum value such that the intermediate circuit voltage is not reduced below a minimum voltage specified by the power supply voltage that occurs during operation, and in the speed range above the specified speed starting from the reduced intermediate circuit voltage, there is a speed dependent transition to the maximum intermediate circuit voltage at maximum speed, in particular for railway vehicles that are supplied with drive energy from an electrical contact wire (4) or from an on-board Diesel-electric generator,
**characterized in that**,
in the drive system (1,2,7), above the specified speed; and concurrently in the lower range of the torque to be generated or braked by the drive motor (7), the intermediate circuit voltage is kept at least approximately at the level that it has below the specified speed.

2. Method according to claim 1, **characterised in that** the intermediate circuit voltage at each operating point is set to achieve the minimum overall power loss of the vehicle.

3. Method according to claim 1 or 2, **characterised in that** the magnetic flux in the drive motor (7) during field weakening is steadily reduced toward higher speeds, and results from U_{zwk}, wherein the magnetic flux in a pulse mode of the inverter (16) is reduced widely as a function of the torque to be applied or braked by the drive motor (7), so that the minimum sum of the power losses in the inverter (16) and drive motor (7) results.

4. Method according to one of the claims 1 to 3, **characterised in that** the drive system (1,2,7) is cooled by means of auxiliary operations (9) such as pumps and ventilators, wherein to achieve a specified temperature of at least one component or a part of said component in the drive system (1,2,7) that has a high thermal time constant, the cooling power is modulated to a sharply reduced value that is far below the maximum cooling power, and above the specified temperature is increased to the maximum cooling power as a function of the current temperature of at least one component or a part of said component.

5. Method according to one of the claims 1 to 4, **characterised in that** the cooling power is controlled proportional to the power loss currently occurring in the drive system (1,2,7) in components that have a low thermal time constant.

6. Method according to claim 4 or 5, **characterised in that** below specified maximum temperature and power loss values in the drive system (1,2,7), the cooling power is increased only if the total additional energy that must be expended for the cooling is less than the sum of the additional electrical energy losses that occur in the drive system (1,2,7) in the absence of cooling.

7. Method according to one of the claims 4 to 6, **characterised in that** individual components of the drive system (1,2,7) have their own associated auxiliary operations (9) for cooling, and that the cooling power of these cooling operations is controlled selectively as a function of the temperature and/or load of the corresponding component.

8. Method according to one of the claims 1 to 6, **characterised in that** the magnetic flux in the drive motor (7) is de-energized in the absence of a torque requirement, and the power converter (11) and inverter (16) are de-actuated.

9. Method according to claim 8, **characterised in that** the auxiliary operations (9) used for cooling are adjusted to the varying load requirement, to the point where they can be de-actuated completely.

10. Method according to one of the claims 1 to 9, wherein in the drive system (1, 2, 7), above the specified speed and up to the maximum speed and concurrently in the lower range of the torque to be generated or braked by the drive motor (7), the intermediate circuit voltage is kept at least approximately at the level that it has below the specified speed.

11. Control device for controlling a variable speed high-power drive system that comprises at least one three-phase motor (7) as drive motor that is designed for constant input power above a specified speed and is fed from an intermediate circuit converter (1) with a variable intermediate circuit voltage, wherein the intermediate circuit converter is fed from a power line (4) and wherein the intermediate circuit voltage in the speed range below the specified speed is reduced from its maximum value such that the intermediate circuit voltage is not reduced below a minimum voltage specified by the power supply voltage that occurs during operation, and in the speed range above the specified speed starting from the reduced intermediate circuit voltage, there is a speed dependent transition to the maximum intermediate circuit voltage at maximum speed, in particular for railway vehicles that are supplied with drive energy from an electrical contact wire (4) or from an on-board Diesel-electric generator,
**characterised in that**,
in the drive system (1, 2, 7), above the specified speed and
concurrently in the lower range of the torque to be generated or braked by the drive motor (7), the intermediate circuit voltage is kept at least approximately at the level that it has below the specified speed.

12. Control device according to claim 11, **characterised in that**, in the drive system (1, 2, 7), above the specified speed and up to the maximum speed and concurrently in the lower range of the torque to be generated or braked by the drive motor (7), the intermediate circuit voltage is kept at least approximately at the level that it has below the specified speed.

13. Control device according to claim 11 or 12, **characterised in that** the intermediate circuit voltage at each operating point is set to achieve the minimum overall power loss of the vehicle.

## Revendications

1. Procédé de commande d'un système d'entraînement haute puissance à vitesse variable, qui comporte au moins un moteur triphasé (7) entant que moteur d'entraînement, qui est conçu pour une puissance absorbée constante au-delà d'une vitesse prédéfinie, et qui est alimenté, de circuit intermédiaire (1), en une tension variable du circuit intermédiaire, le convertisseur indirect (1) étant alimenté à partir d'un réseau d'alimentation (4), la tension du circuit intermédiaire diminuant, par rapport à sa valeur maximale, dans le domaine de vitesses en dessous de la vitesse prédéfinie, de telle sorte que la tension du circuit intermédiaire ne diminue pas en dessous d'une tension minimale, définie par la tension du réseau d'alimentation appliquée en cours de marche, et, dans le domaine des vitesses au-dessus de la vitesse prédéfinie, et en partant de la valeur diminuée de la tension du circuit intermédiaire, il se crée une transition, dépendant de la vitesse, vers la tension maximale du circuit intermédiaire en présence d'une vitesse maximale, en particulier pour véhicules ferroviaires, qui sont alimentés en énergie d'entraînement par une ligne aérienne de pantographe (4) ou par un générateur électrique interne au véhicule et entrainé par un moteur diesel,
**caractérisé en ce que**,
dans le système d'entraînement (1,2,7), la tension du circuit intermédiaire, pour des vitesses supérieures à la vitesse prédéfinie, et
en même temps dans le domaine inférieur du couple à être appliqué ou freiné par le moteur d'entraînement (7), est maintenue au moins largement à la valeur qu'elle présente en dessous de la vitesse prédéfinie.

2. Procédé selon la revendication 1, **caractérisé en ce que** la valeur de la tension du circuit intermédiaire est, pour chaque point de fonctionnement, ajustée de façon qu'il en résulte une perte totale minimale de puissance du véhicule.

3. Procédé selon la revendication 1 ou 2, **caractérisé en ce que** le flux magnétique dans le moteur d'entraînement (7) subit une diminution continue lors d'un affaiblissement du champ vers les grandes vitesses et résulte de U_{zwk'} le flux magnétique, en mode impulsions de l'onduleur (16), subissant une réduction étendue en fonction du couple devant être appliqué ou freiné par le moteur d'entraînement (7), ce qui conduit à une valeur minimale pour la somme des pertes de puissance dans l'onduleur (16) et le moteur d'entraînement (7).

4. Procédé selon au moins l'une des revendications 1 à 3, **caractérisé en ce que** le système d'entraînement (1,2,7) est refroidi à l'aide d'auxiliaires (9) tels que des pompes et des ventilateurs, la puissance frigorifique, jusqu'à ce que l'on arrive à température prédéfinie d'au moins un composant ayant une grande constante de temps thermique ou d'une partie de ces derniers dans le système d'entraînement (1,2,7), étant commandée pour prendre une valeur fortement diminuée, se trouvant loin en dessous de la puissance frigorifique maximale, et, au-delà de la température prédéfinie, est augmentée à la puissance frigorifique maximale en fonction de la température actuelle d'au moins un composant, ou d'une partie de ce dernier.

5. Procédé selon au moins l'une des revendications 1 à 4, **caractérisé en ce que** la puissance frigorifique est commandée d'une manière proportionnelle aux pertes de puissance apparaissant actuellement dans le système d'entraînement (1,2,7) au niveau des composants ayant une faible constante de temps thermique.

6. Procédé selon la revendication 4 ou 5, **caractérisé en ce que**, en dessous de valeurs maximales prédéfinies de la température et des pertes de puissance dans le système d'entraînement (1,2,7), on n'augmente la puissance frigorifique que quand l'énergie totale qu'il faut utiliser en plus pour le refroidissement est inférieure à la somme des pertes d'énergie électrique, dans le système d'entraînement (1,2,7), apparaissant en plus en l'absence de refroidissement.

7. Procédé selon au moins l'une des revendications 4 à 6, **caractérisé en ce qu'**à composants individuels du système d'entraînement (1,2,7) sont affectés des auxiliaires propriétaires (9) permettant le refroidissement, et que la puissance frigorifique de ces auxiliaires de refroidissement est commandée d'une manière sélective, dépendant de la température et/ou de la charge du composant affecté.

8. Procédé selon au moins l'une des revendications 1 à 6, **caractérisé en ce** le flux magnétique dans le moteur d'entraînement (7) est désexcité en l'absence de demande de couple, et de même le convertisseur réseau (11) et l'onduleur (16) sont coupés.

9. Procédé selon la revendication 8, **caractérisé en ce que** les auxiliaires (9) présents pour le refroidissement sont adaptés aux demandes modifiées de charge, jusqu'à leur coupure complète.

10. Procédé selon au moins l'une des revendications 1 à 9, **caractérisé en ce que**, dans le système d'entraînement (1,2,7), la valeur de la tension du circuit intermédiaire, pour des vitesses du moteur d'entraînement (7) supérieures à la vitesse prédéfinie, et jusqu'à la vitesse maximale, et en même temps dans le domaine inférieur du couple devant être appliqué ou freiné par le moteur d'entraînement (7), est maintenue au moins largement à la valeur qu'elle présente en dessous de la vitesse prédéfinie.

11. Dispositif de commande d'un système d'entraînement à vitesse variable haute puissance, qui entant que moteur d'entraînement comporte au moins un moteur triphasé (7), qui est conçu pour une puissance absorbée constante au-delà d'une vitesse prédéfinie, et qui est alimenté, de circuit intermédiaire (1), en une tension variable de circuit intermédiaire, le convertisseur indirect (1) étant alimenté à partir d'un réseau (4), la tension du circuit intermédiaire diminuant, par rapport à sa valeur maximale, dans le domaine de vitesses en dessous de la vitesse prédéfinie, de telle sorte que la tension du circuit intermédiaire ne diminue pas en dessous d'une tension minimale, définie par la tension de secteur appliquée en cours de marche, et, dans le domaine des vitesses au-dessus de la vitesse prédéfinie, et en partant de la valeur diminuée de la tension du circuit intermédiaire, il se crée une transition, dépendant de la vitesse, vers la tension maximale du circuit intermédiaire en présence d'une vitesse maximale, en particulier pour véhicules ferroviaires, qui sont alimentés en énergie d'entraînement par une ligne aérienne de pantographe (4) ou par une générateur électrique interne au véhicule et entrainé par un moteur diesel,
**caractérisé en ce que**,
dans le système d'entraînement (1,2,7), la tension du circuit intermédiaire, pour des vitesses du moteur d'entraînement (7) supérieures à la vitesse prédéfinie, et en même temps dans le domaine inférieur du couple devant être appliqué ou freiné par le moteur d'entraînement (7), est maintenue au moins largement à la valeur qu'elle présente en dessous de la vitesse prédéfinie.

12. Dispositif de commande selon la revendication 11, **caractérisé en ce que**, dans le système d'entraînement (1,2,7), la tension du circuit intermédiaire, pour des vitesses du moteur d'entraînement (7) supérieures à la vitesse prédéfinie, et jusqu'à la vitesse maximale, et en même temps dans le domaine inférieur du couple devant être appliqué ou freiné par le moteur d'entraînement (7), est maintenue au moins largement à la valeur qu'elle présente en dessous de la vitesse prédéfinie.

13. Dispositif de command selon la revendication 11 ou 12, **caractérisé en ce que** la valeur de la tension du circuit intermédiaire est, pour chaque point de fonctionnement, ajustée de façon qu'il en résulte une perte totale minimale de puissance du véhicule.
